(19)

Europäisches
Patentamt
European
Patent Office
Office européen
des brevets

(11) **EP 2 966 204 A1**

(12) **EUROPEAN PATENT APPLICATION**
published in accordance with Art. 153(4) EPC

(43) Date of publication:
**13.01.2016 Bulletin 2016/02**

(21) Application number: **14759992.2**

(22) Date of filing: **21.02.2014**

(51) Int Cl.:
**D02G 3/04** *(2006.01)* **D03D 1/00** *(2006.01)*
**D03D 15/00** *(2006.01)* **D03D 15/12** *(2006.01)*
**D04B 1/14** *(2006.01)* **D04B 21/00** *(2006.01)*

(86) International application number:
**PCT/JP2014/054989**

(87) International publication number:
**WO 2014/136662 (12.09.2014 Gazette 2014/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.03.2013 JP 2013044120**

(71) Applicant: **Mitsubishi Gas Chemical Company,
Inc.
Tokyo 100-8324 (JP)**

(72) Inventors:
• **NAKAI, Asami
Gifu-shi
Gifu 501-1193 (JP)**
• **OOTANI, Akio
Gifu-shi
Gifu 501-1193 (JP)**

• **KAJI, Masataka
Kahoku-shi
Ishikawa 929-1215 (JP)**
• **TAKAGI, Mitsuro
Kahoku-shi
Ishikawa 929-1215 (JP)**
• **MATSUMOTO, Nobuhiko
Hiratsuka-shi
Kanagawa 254-0016 (JP)**
• **MITADERA, Jun
Hiratsuka-shi
Kanagawa 254-0016 (JP)**

(74) Representative: **Vossius & Partner
Patentanwälte Rechtsanwälte mbB
Siebertstrasse 3
81675 München (DE)**

(54) **COMBINED FILAMANET YARN, WOVEN AND KNITTED FABRIC, COMPOSITE MATERIAL,
AND PROCESS FOR MANUFACTURING COMPOSITE MATERIAL**

(57) Provided is commingled yarn excellent in strength. The commingled yarn comprises a continuous thermoplastic resin fiber and a continuous reinforcing fiber as fiber components, which has twist.

EP 2 966 204 A1

**Description**

TECHNICAL FIELD

The present invention relates to commingled yarns comprising continuous thermoplastic resin fibers and continuous reinforcing fibers as fiber components, which can be formed into molded articles having high mechanical strength and excellent appearance. The present invention also relates to weave fabrics and knitted fabrics using such commingled yarns. Further, the present invention relates to composite materials using such commingled yarns, weave fabrics or knitted fabrics. In addition, the present invention relates to processes for preparing such composite materials.

BACKGROUND ART

Recently, thermoplastic resin composite materials obtainable by reinforcing thermoplastic resins with continuous reinforcing fibers have attracted attention. The use of continuous reinforcing fibers can be expected to achieve high mechanical properties, and the use of thermoplastic resins provides advantages such as recycling, secondary processing and the like. However, the thermoplastic resin composite materials reinforced with continuous reinforcing fibers have the disadvantage that continuous reinforcing fiber bundles are hard to impregnate with thermoplastic resins because of high melt viscosity of the resins.

To overcome this disadvantage, commingled yarns have attracted attention, which are fibrous intermediate materials obtainable by combining a continuous thermoplastic resin fiber and a continuous reinforcing fiber. For example, patent document 1 discloses commingled yarns for use in composite materials comprising a opened untwisted continuous reinforcing fiber bundle and a opened untwisted continuous thermoplastic resin fiber bundle, characterized in that the opened continuous reinforcing fiber bundle and the opened continuous thermoplastic resin fiber bundle each have an opening index F of 0.5 to 3 as defined by the formula 1 below:

$$F = W/DN$$

wherein F represents the opening index, W represents the width of a fiber bundle (mm), D represents the diameter of a single filament (mm), and N represents the number of single filaments in the fiber bundle, and the width of the fiber bundle is measured as is on a spool or at the outlet of the opening apparatus immediately after the bundles are opened.

Such commingled yarns can provide commingled yarns for use in composite materials in which the continuous reinforcing fiber bundle and the continuous thermoplastic resin fiber bundle are homogeneously commingled on a single filament level because the bundles are commingled after the bundles each have been sufficiently opened.

REFERENCES

PATENT DOCUMENTS

Patent document 1: JP-A-H9-324331

SUMMARY OF THE INVENTION

PROBLEMS TO BE SOLVED BY THE INVENTION

However, our review of patent document 1 revealed that molded articles obtainable by thermally processing such commingled yarns may have low mechanical strength (especially tensile strength). Moreover, the commingled yarn and molded articles obtainable therefrom were also shown to have poor appearance. The present invention aims to solve such problems, thereby providing commingled yarns comprising continuous thermoplastic resin fibers and continuous reinforcing fibers as fiber components, which exhibit high mechanical strength even after thermal processing and excellent appearance before and after thermal processing.

MEANS TO SOLVE THE PROBLEMS

As a result of our studies under these circumstances, we found that the decrease in mechanical strength of such commingled yarns after thermal processing is attributed to the disturbance of the orientation of the continuous reinforcing fibers during thermal processing. Then, we found that the disturbance of the orientation of the continuous reinforcing fiber can be reduced by twisting the commingled yarns. Further, we found that when the disturbance of the orientation of the continuous reinforcing fibers is reduced, the appearance of the molded articles also improves, whereby we achieved the present invention. Specifically, the problems described above were solved by the following means [1], preferably [2] to [8].

[1] A commingled yarn comprising a continuous thermoplastic resin fiber and a continuous reinforcing fiber as fiber components, which has twist.

[2] The commingled yarn according to [1], wherein the continuous thermoplastic resin fiber is a polyamide resin fiber.

[3] The commingled yarn according to [1] or [2], wherein the continuous thermoplastic resin fiber comprises at least one kind selected from polyamide 6, polyamide 66 and a xylylenediamine-based polyamide.

[4] The commingled yarn according to any one of [1] to [3], wherein the continuous reinforcing fiber is a carbon fiber and/or a glass fiber.

[5] A weave fabric or knitted fabric using a commingled yarn according to any one of [1] to [4].

[6] A composite material obtainable by thermally processing a commingled yarn according to any one of [1] to [4] or a weave fabric or knitted fabric according to [5].

[7] A process for preparing a composite material, comprising preparing a commingled yarn comprising a continuous thermoplastic resin fiber and a continuous reinforcing fiber as fiber components, twisting the commingled yarn, and thermally processing the twisted commingled yarn.

[8] The process according to [7], further comprising weaving or knitting the twisted commingled yarn before the commingled yarn is thermally processed.

ADVANTAGES OF THE INVENTION

The present invention made it possible to provide commingled yarns that can retain high mechanical strength even after molding and also retain good appearance before and after thermal processing.

BRIEF EXPLANATION OF THE DRAWINGS

Fig. 1 is a schematic diagram showing differences between the prior art and the present invention.
Fig. 2 is a schematic diagram showing processes for preparing composite fibers.
Fig. 3 is a photograph showing the orientation state of the continuous carbon fibers of a commingled yarn prepared in an Example herein and a commingled yarn of a Comparative example.

THE MOST PREFERRED EMBODIMENTS OF THE INVENTION

The present invention will be explained in detail below. As used herein, each numerical range expressed by two values on both sides of "to" is used to mean the range including the values indicated before and after "to" as lower and upper limits.
As used herein, the fineness and the number of filaments refer to the average fineness and the average number of filaments measured at random ten points of each fiber respectively, unless otherwise specified.

The commingled yarns of the present invention are commingled yarns comprising a continuous thermoplastic resin fiber and continuous reinforcing fibers as fiber components, characterized in that the commingled yarns has a twist. When the commingled yarn has a twist, they can be molded into molded articles having high mechanical strength even after thermal processing (e.g., thermal processing in the range of the melting point of the thermoplastic resin plus 0 to 80 °C). First, the reason for this is explained.

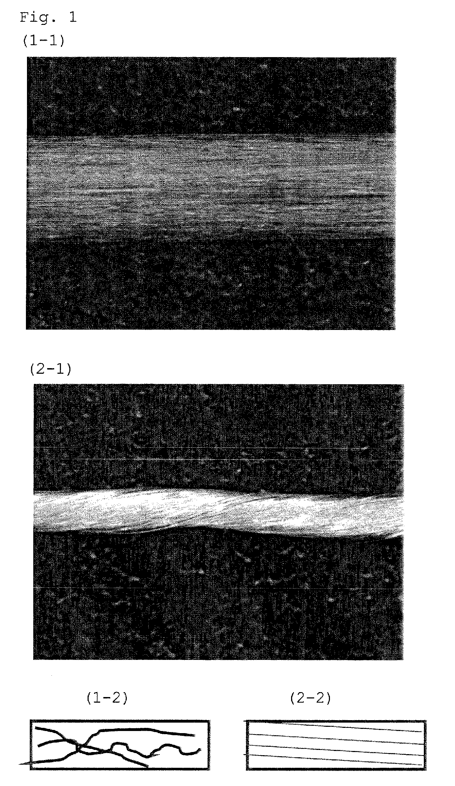

Fig. 1 is a schematic diagram showing differences between the prior art and the present invention. (1-1) and (2-1) are photographs of the appearance of commingled yarns before thermal processing, wherein (1-1) shows an untwisted commingled yarn and (2-1) shows a twisted commingled yarn. (1-2) and (2-2) are schematic diagrams showing the orientation state of continuous reinforcing fibers after thermal processing of the commingled yarns.

In the state shown in Figs 1(1-1) and (2-1) (before thermal processing), both continuous reinforcing fibers are homogeneously dispersed. However, the orientation of the continuous reinforcing fibers of the untwisted commingled yarn is disturbed as shown in (1-2) once the commingled yarn is heated. In contrast, the continuous reinforcing fibers of the twisted commingled yarn retain an ordered orientation as shown in Fig. 1(2-2) even after thermal processing. Thus, the twisted commingled yarn can retain high mechanical strength even after thermal processing. Moreover, the twisted commingled fiber can also achieve excellent appearance in molded articles prepared therefrom because the continuous reinforcing fibers retain an ordered orientation state. Surprisingly, the impregnation ratio of the thermoplastic resin by the continuous reinforcing fibers during thermoforming also tends to improve.

The commingled yarn of the present invention will be explained in more detail below.

The commingled yarn of the present invention is obtainable by twisting a commingled yarn comprising a continuous thermoplastic resin fiber and a continuous reinforcing fiber as fiber components. Such twisting allows for retaining high mechanical strength even after thermal processing.

The twisting technique is not specifically limited, and known techniques can be applied. The number of twists can be suitably selected depending on the type of the thermoplastic resin used for the continuous thermoplastic resin fiber, the number of filaments and the fineness of the thermoplastic resin fiber, the type, the number of filaments and the fineness of the continuous reinforcing fiber, and the ratio between the numbers of filaments or the ratio between the finenesses of the continuous thermoplastic resin fiber and the continuous reinforcing fiber, and can be, for example, 1 to 200 twists/m (fiber length), more specifically 1 to 100 twists/m, even more specifically 1 to 70 twists/m, especially 1 to 50 twists/m. Further, the minimum number of twists is preferably 11 twists/m or more, more preferably 15 twists/m or more, even more preferably 20 twists/m or more.

The commingled yarns of the present invention are typically prepared by using a continuous thermoplastic resin fiber bundle and a continuous reinforcing fiber bundle. Preferably, the total fineness of the fibers used to prepare one commingled yarn (the sum of the total fineness of the continuous thermoplastic resin fiber and the total fineness of the continuous reinforcing fiber used to prepare one commingled yarn) is 1000 to 100000 dtex, more preferably 1500 to 50000 dtex, even more preferably 2000 to 50000 dtex, especially preferably 3000 to 5000 dtex.

Preferably, the ratio between the total fineness of the continuous thermoplastic resin fiber and the total fineness of the continuous reinforcing fiber used to prepare one commingled yarn (the total fineness of the continuous thermoplastic resin fiber / the total fineness of the continuous reinforcing fiber) is 0.1 to 10, more preferably 0.1 to 6.0, even more preferably 0.8 to 2.0.

Preferably, the total number of filaments used to prepare one commingled yarn (the sum of the total number of filaments of the continuous thermoplastic resin fiber and the total number of filaments of the continuous reinforcing fiber) is 100 to 100000 filaments, more preferably 1000 to 100000 filaments, even more preferably 1500 to 70000 filaments, further more preferably 2000 to 20000 filaments, still more preferably 2500 to 10000 filaments, especially preferably 3000 to 5000 filaments. When the total number of filaments is in such ranges, the commingled yarn exhibits an improved ability to commingle fibers and achieves more excellent properties and texture as a composite material. Further, the commingled yarn has less areas in which either fiber is concentrated and both fibers are likely to be dispersed more homogeneously.

Preferably, the ratio between the total number of filaments of the continuous thermoplastic resin fiber and the total number of filaments of the continuous reinforcing fiber (the total number of filaments of the continuous thermoplastic resin fiber / the total number of filaments of the continuous reinforcing fiber) used to prepare one commingled yarn is 0.001 to 1, more preferably 0.001 to 0.5, even more preferably 0.05 to 0.2. When the total number is in such ranges, the commingled yarn exhibits an improved ability to commingle fibers and achieves more excellent properties and texture as a composite material. When the total number is in the ranges indicated above, the continuous thermoplastic resin fiber and the continuous reinforcing fiber, which should preferably be dispersed more homogeneously in the commingled yarn, are also likely to be dispersed more homogeneously.

Preferably, the dispersity of the continuous reinforcing fiber in the commingled yarns of the present invention is 40 to 100, more preferably 60 to 100, especially preferably 65 to 100. When the dispersity is in such ranges, the commingled yarn exhibits more homogeneous properties and the resulting molded article exhibits more improved appearance. Further, the molded article prepared by using the commingled yarn has more excellent mechanical properties.

As used herein, the dispersity is an index showing how homogeneously a continuous thermoplastic resin fiber and a continuous reinforcing fiber are dispersed in a commingled yarn and defined by the mathematical formula below:

$$D(\%) = (1 - (Lcf + Lpoly)/Ltot) * 100$$

wherein D represents the dispersity, Ltot represents the cross-sectional area of the commingled yarn, Lcf represents the total of areas of 31400 $\mu m^2$ or more solely occupied by the continuous reinforcing fiber in the cross-section of the commingled yarn, and Lpoly represents the total of areas of 31400 $\mu m^2$ or more solely occupied by the resin fiber in the cross-section of the commingled yarn. The cross-section of the commingled yarn was measured at right angles to the longitudinal direction of the commingled yarn. The areas are measured by using a digital microscope.

Higher values of the dispersity D mean that the continuous thermoplastic resin fiber and the continuous reinforcing fiber are dispersed more homogeneously.

The continuous thermoplastic resin fiber and/or the continuous reinforcing fiber used in the commingled yarns of the present invention are preferably used after the fibers each have been surface-treated with a treating agent. Such an embodiment provides a commingled yarn in which the continuous thermoplastic resin fiber and the continuous reinforcing fiber are dispersed more homogeneously, e.g. , a commingled yarn wherein the continuous reinforcing fiber has a dispersity of 40 to 100. As a result, the advantages of the present invention such as mechanical strength are also achieved more effectively. These treating agents will be described in detail later.

In addition to the continuous thermoplastic resin fiber, the continuous reinforcing fiber, the treating agent for the continuous thermoplastic resin fiber and the treating agent for the continuous reinforcing fiber described above, the commingled yarns of the present invention may contain other components such as short carbon fibers, carbon nanotubes, fullerenes, cellulose microfibers, talc, mica and the like. These other components should preferably be contained in an amount of 5 % by mass or less of the commingled yarns.

The commingled yarns of the present invention can exhibit a 1.03-fold or higher increase in mechanical strength after thermal processing in the range of the melting point of the thermoplastic resin plus 0 to 80 °C as compared with the tensile strength of untwisted commingled yarns made from the same materials after thermal processing under the same conditions (improvement in tensile strength). Especially, the present invention has the benefits that such an improvement in tensile strength can be as high as 1.05 to 2.00-fold. The present invention allows the continuous reinforcing fiber to retain a uniform orientation after thermal processing by twisting the commingled yarns, thereby improving mechanical strength such as tensile strength and tensile modulus, and it should be understood that mechanical strength can be further improved by those killed in the art who suitably select the type of the thermoplastic resin used for the continuous thermoplastic resin fiber, the number of filaments and the fineness of the thermoplastic resin, the type, the number of filaments and the fineness of the continuous reinforcing fiber, the ratio between the numbers of filaments or the ratio between the finenesses of the continuous thermoplastic resin fiber and the continuous reinforcing fiber, the treating agent for the continuous thermoplastic resin fiber, the treating agent for the continuous reinforcing fiber, the number of twists and the like.

<Continuous thermoplastic resin fiber>

Typically, the continuous thermoplastic resin fiber used in the present invention is a continuous thermoplastic resin fiber bundle composed of multiple filaments, and the continuous thermoplastic resin fiber bundle is used to prepare a commingled yarn of the present invention.

As used herein, the continuous thermoplastic resin fiber refers to a thermoplastic resin fiber having a fiber length greater than 6 mm. The average fiber length of the continuous thermoplastic resin fiber used in the present invention is not specifically limited, but preferably in the range of 1 to 20, 000 m, more preferably 100 to 10, 000 m, even more preferably 1,000 to 7,000 m to improve moldability.

The continuous thermoplastic resin fiber used in the present invention is made of a thermoplastic resin composition. The thermoplastic resin composition comprises a thermoplastic resin as a major component (typically comprises a thermoplastic resin at 90 % by mass or more of the composition) and further comprises known additives or the like, as appropriate.

Thermoplastic resins that can be used include a wide variety of those used for commingled yarns for composite materials, e.g., polyolefin resins such as polyethylene and polypropylene; polyamide resins; polyester resins such as polyethylene terephthalate and polybutylene terephthalate; polyether ketones, polyether sulfones, thermoplastic polyether imides and the like. In the present invention, the thermoplastic resin is preferably a polyamide resin.

Polyamide resins that can be used in the present invention will be described in detail later. Typically, the continuous thermoplastic resin fiber used in the present invention is prepared by using a continuous thermoplastic resin fiber bundle composed of continuous thermoplastic resin fiber filaments, wherein the total fineness per continuous thermoplastic resin fiber bundle is preferably 40 to 600 dtex, more preferably 50 to 500 dtex, even more preferably 100 to 400 dtex. When the total fineness is in such ranges, the dispersion state of the continuous thermoplastic resin fiber in the resulting commingled yarn further improves. Preferably, the number of filaments constituting the continuous thermoplastic resin fiber bundle is 1 to 200 filaments, more preferably 5 to 100 filaments, even more preferably 10 to 80 filaments, especially preferably 20 to 50 filaments. When the number of filaments is in such ranges, the dispersion state of the continuous thermoplastic resin fiber in the resulting commingled yarn further improves.

In the present invention, the number of such polyamide resin fiber bundles used to prepare one commingled yarn is preferably in the range of 1 to 100 bundles, more preferably in the range of 1 to 50 bundles, even more preferably in the range of 3 to 15 bundles. When the number of such polyamide resin fiber bundles is in such ranges, the advantages of the present invention are achieved more effectively.

Preferably, the total fineness of the polyamide resin fiber (A) used to prepare one commingled yarn is 200 to 12000 dtex, more preferably 1000 to 3000 dtex. When the total fineness is in such ranges, the advantages of the present invention are achieved more effectively.

Preferably, the total number of filaments of the polyamide resin fiber (A) used to prepare one commingled yarn is 10 to 2000 filaments, more preferably 20 to 1600 filaments, even more preferably 200 to 350 filaments. When the total number of filaments is in such ranges, the composite fiber exhibits an improved ability to commingle fibers and achieves more excellent properties and texture as a composite material. When the number of filaments is 10 filaments or more, opened fiber bundles are likely to be combined more homogeneously. When the number of filament is 2000 filaments or less, either fiber is less likely to be concentrated and a more homogeneous composite fiber can be obtained.

Preferably, the polyamide resin fiber bundle used in the present invention has a tensile strength of 2 to 10 gf/d. When the polyamide resin fiber bundle is in such a range, the composite fiber tends to be more readily prepared.

«Treating agent for the continuous thermoplastic resin fiber»

The continuous thermoplastic resin fiber used in the present invention is also preferably treated with a treating agent on its surface. According to such an embodiment, the dispersity of the continuous reinforcing fiber in the commingled yarn further improves. The treating agent is not specifically limited to any type so far as the treating agent has the function to combine filaments of the continuous thermoplastic resin fiber into a bundle. Examples of treating agents preferably include ester compounds, alkylene glycol compounds, polyolefin compounds, and phenyl ether compounds, more specifically surfactants.

The amount of the treating agent for the continuous thermoplastic resin fiber is 0.1 to 2 % by mass, more preferably 0.5 to 1.5 % by mass of the continuous thermoplastic resin fiber. When the amount is in such ranges, a more homogeneous commingled yarn is likely to be obtained because the continuous thermoplastic resin fiber is well dispersed. When the amount is in such ranges, the continuous thermoplastic resin fiber can be more effectively prevented from breakage due to the friction between the continuous thermoplastic resin fiber and a machine or the friction between filaments during the preparation of a commingled yarn. Further, the continuous thermoplastic resin fiber can be more effectively prevented from breakage due to the mechanical stress applied to the continuous thermoplastic resin fiber to obtain a homogeneous commingled yarn.

«Method for treating the continuous thermoplastic resin fiber with the treating agent»

The method for treating the continuous thermoplastic resin fiber with the treating agent is not specifically limited so far as an intended purpose can be achieved. For example, a solution containing the treating agent dissolved therein may be applied to the continuous thermoplastic resin fiber to deposit the treating agent on the surface of the continuous thermoplastic resin fiber. Alternatively, the treating agent may be sprayed by air-blowing on the surface of the continuous thermoplastic resin fiber.

«Polyamide resin composition»

Preferably, the continuous thermoplastic resin fiber of the present invention is made from a polyamide resin composition, as described above.

The polyamide resin composition comprises a polyamide resin as a major component, and polyamide resins used here include polyamide 4, polyamide 6, polyamide 11, polyamide 12, polyamide 46, polyamide 66, polyamide 610, polyamide 612, polyhexamethylene terephthalamide (polyamide 6T), polyhexamethylene isophthalamide (polyamide 6I), poly(m-xylylene adipamide), poly(m-xylylene dodecamide), polyamide 9T, polyamide 9MT and the like.

Among the polyamide resins listed above, polyamide 6, polyamide 66, or a xylylenediamine-based polyamide resin (XD-based polyamide) obtainable by polycondensation of a straight-chain aliphatic $\alpha,\omega$-dibasic acid with a xylylenediamine is more preferably used to improve moldability and heat resistance. Among them, an XD-based polyamide is more preferred to improve heat resistance and flame retardance. When the polyamide resin is a mixture, the proportion of the XD-based polyamide in the polyamide resin is preferably 50 % by weight or more, more preferably 80 % by weight or more.

In the present invention, especially preferred are polyamide resins containing a diamine structural unit, 50 mol % or more of which is derived from xylylenediamine, and further preferably having a number average molecular weight (Mn) of 6,000 to 30,000, and especially more preferred are those polyamide resins containing 0.5 to 5 % by mass of components having a molecular weight of 1,000 or less. Preferred embodiments of polyamide resin compositions used in the present invention are described below, but it should be understood that the present invention is not limited to these embodiments.

The polyamide resin used in the present invention is a fibrous material made from a polyamide resin containing a diamine structural unit (a structural unit derived from a diamine), 50 mol % or more of which is derived from xylylenediamine, i.e., a xylylenediamine-based polyamide resin containing a diamine, 50 mol % or more of which is derived from xylylenediamine, and which has been polycondensed with a dicarboxylic acid.

Preferably, the polyamide resin is a xylylenediamine-based polyamide resin comprising a diamine structural unit, 70 mol % or more, more preferably 80 mol % or more of which is derived from m-xylylenediamine and/or p-xylylenediamine, and a dicarboxylic acid structural unit (a structural unit derived from a dicarboxylic acid), preferably 50 mol % or more, more preferably 70 mol % or more, especially 80 mol % or more of which is derived from a straight chain aliphatic $\alpha,\omega$-dicarboxylic acid preferably containing 4 to 20 carbon atoms.

Examples of diamines other than m-xylylenediamine and p-xylylenediamine that can be used as starting diamine components of the xylylenediamine-based polyamide resin include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decane and bis(aminomethyl)tricyclodecane; diamines having an aromatic ring such as bis(4-aminophenyl)ether, p-phenylenediamine and bis (aminomethyl) naphthalene and the like; and they can be used alone or as a mixture of two or more of them.

When a diamine other than xylylenediamine is used as a diamine component, it should be used at a proportion of 50 mol % or less, preferably 30 mol % or less, more preferably 1 to 25 mol %, especially preferably 5 to 20 mol % of the diamine structural unit.

Examples of preferred straight chain aliphatic $\alpha,\omega$-dicarboxylic acids containing 4 to 20 carbon atoms for use as starting dicarboxylic acid components of the polyamide resin include, for example, aliphatic dicarboxylic acids such as succinic acid, glutaric acid, pimelic acid, suberic acid, azelaic acid, adipic acid, sebacic acid, undecanoic diacid, dodecanoic diacid and the like, and they can be used alone or as a mixture of two or more of them, among which adipic acid or sebacic acid, especially sebacic acid is preferred because the resulting polyamide resin has a melting point in a range suitable for molding.

Examples of dicarboxylic acid components other than the straight chain aliphatic $\alpha,\omega$-dicarboxylic acids containing 4 to 20 carbon atoms listed above include phthalic acid compounds such as isophthalic acid, terephthalic acid and orthophthalic acid; isomeric naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid and 2,7-naphthalenedicarboxylic acid and the like; and they can be used alone or as a mixture of two or more of them.

A preferred dicarboxylic acid for use as a dicarboxylic acid component other than the straight chain aliphatic $\alpha,\omega$-dicarboxylic acids containing 4 to 20 carbon atoms is terephthalic acid and isophthalic acid because of moldability and barrier properties. The proportion of terephthalic acid and isophthalic acid is preferably 30 mol % or less, more preferably 1 to 30 mol %, especially preferably in the range of 5 to 20 mol % of the dicarboxylic acid structural unit.

In addition to the diamine components and dicarboxylic acid components, lactams such as $\varepsilon$-caprolactam and laurolactam or aliphatic aminocarboxylic acids such as aminocaproic acid and aminoundecanoic acid can also be used as components to be copolymerized to make up the polyamide resin so far as the advantages of the present invention are not adversely affected.

The polyamide resin is preferably a poly(m-xylylene adipamide) resin, a poly(m-xylylene sebacamide) resin, a poly(p-xylylene sebacamide) resin, and a mixed poly (m-xylylene/p-xylylene adipamide) resin obtained by polycondensing a xylylenediamine mixture of m-xylylenediamine and p-xylylenediamine with adipic acid, more preferably are poly(m-xylylene sebacamide) resins, poly(p-xylylene sebacamide) resins, and mixed poly(m-xylylene/p-xylylene sebacamide) resins obtained by polycondensing a xylylenediamine mixture of m-xylylenediamine and p-xylylenediamine with sebacic acid. These polyamide resins tend to have especially improved moldability.

In the present invention, the polyamide resin has a number average molecular weight (Mn) of 6,000 to 30,000, and contains 0.5 to 5 % by mass of components having a molecular weight of 1,000 or less.

When the number average molecular weight (Mn) is in the range of 6,000 to 30,000, the resulting composite material or molded articles prepared therefrom tend to have more improved strength. The number average molecular weight (Mn) is preferably 8,000 to 28,000, more preferably 9,000 to 26, 000, even more preferably 10,000 to 24,000, still more preferably 11,000 to 22, 000, especially preferably 12, 000 to 20,000. When the number average molecular weight is in such ranges, heat resistance, elastic modulus, dimensional stability, and moldability are more improved.

The number average molecular weight (Mn) here is calculated from the terminal amino group concentration $[NH_2]$ ($\mu$eq/g) and the terminal carboxyl group concentration $[COOH]$ ($\mu$eq/g) of a polyamide resin by the equation below:

```
Number average molecular weight (Mn) = 2,000,000/([COOH]+[NH₂]).
```

Further, the polyamide resin preferably contains 0.5 to 5 % by mass of components having a molecular weight of 1,000 or less. When such low-molecular weight components are contained in such a range, the impregnation of the resulting polyamide resin into the continuous reinforcing fiber improves and therefore, molded articles prepared therefrom have good strength and low warpage. If the content of these low-molecular weight components exceeds 5 % by mass, they bleed to result in low strength and poor surface appearance. The content of components having a molecular weight of 1,000 or less is preferably 0.6 to 4.5 % by mass, more preferably 0.7 to 4 % by mass, even more preferably 0.8 to 3.5 % by mass, especially preferably 0.9 to 3 % by mass, most preferably 1 to 2.5 % by mass.

The content of low-molecular weight components having a molecular weight of 1,000 or less can be controlled by regulating melt polymerization conditions such as the temperature or pressure at which the polyamide resin is polymerized or the rate of dropwise addition of the diamine. Especially, the polyamide resin can be controlled at any proportion by depressurizing the inside of the reactor at a late stage of melt polymerization to remove the low-molecular weight components. Alternatively, the low-molecular weight components may be removed by extracting the polyamide resin prepared by melt polymerization with hot water or the low-molecular weight components may be removed by further solid state polymerization under reduced pressure after melt polymerization. During the solid state polymerization, the low-molecular weight components can be controlled at any content by regulating the temperature or the degree of vacuum.

Alternatively, the content can also be controlled by adding a low-molecular weight component having a molecular weight of 1,000 or less to the polyamide resin later.

The amount of the polyamide resin having a molecular weight of 1,000 or less can be determined by gel permeation chromatography (GPC) as a relative value equivalent to the amount of poly(methyl methacrylate) (PMMA) used as a standard by employing the instrument "HLC-8320GPC" available from Tosoh Corporation and two "TSK gel Super HM-H" columns eluting with 10 mmol/l sodium trifluoroacetate in hexafluoroisopropanol (HFIP) under conditions of a resin concentration of 0.02 % by mass, a column temperature of 40 °C, a flow rate of 0.3 ml/min and detection with a refractive index detector (RI). A calibration curve is generated from measurements of six PMMA standards dissolved in HFIP.

In the polyamide resin composition, 0.01 to 1 % by mass of the polyamide resin preferably consists of cyclic compounds (polyamide resin). As used herein, the term "cyclic compound" refers to a compound in which a ring is formed by a salt composed of a diamine component and a dicarboxylic acid component used as starting materials of a polyamide resin, and which can be quantified by the following method.

Pellets of the polyamide resin are ground in an ultracentrifugal mill and passed through a sieve of φ0.25 mm to weigh out 10 g of a powder sample of φ0.25 mm or less in a cylindrical paper filter. Then, the sample is extracted with 120 ml of methanol for 9 hours by the Soxhlet method, and the resulting extract is concentrated to 10 ml in an evaporator with care to avoid evaporation to dryness. If an oligomer precipitates during then, the oligomer should be removed by passing it through a PTFE filter as appropriate. The resulting extract is diluted 50-fold with methanol and subjected to a quantitative analysis using a high performance liquid chromatograph HPLC from Hitachi High-Technologies Corporation to determine the content of cyclic compounds.

When cyclic compounds are contained in the range indicated above, the molded articles prepared therefrom tend to have good strength and low warpage, thereby further improving dimensional stability.

More preferably, the amount of cyclic compounds contained is 0.05 to 0.8 % by mass, even more preferably 0.1 to 0.5 % by mass of the polyamide resin.

Polyamide resins prepared by melt polymerization often contain a significant amount of cyclic compounds, which are typically removed by hot water extraction or the like. The amount of cyclic compounds can be controlled by regulating the extent of the hot water extraction. Alternatively, the amount of cyclic compounds can also be controlled by regulating the pressure during melt polymerization.

Preferably, the polyamide resin used in the present invention has a molecular weight distribution (weight average molecular weight / number average molecular weight (Mw/Mn)) of 1.8 to 3.1. The molecular weight distribution is more preferably 1.9 to 3.0, even more preferably 2.0 to 2.9. When the molecular weight distribution is in such ranges, a composite material having excellent mechanical properties tends to be readily obtained.

The molecular weight distribution of the polyamide resin can be controlled by, for example, appropriately selecting the type and the amount of the initiator or catalyst used during polymerization and polymerization reaction conditions such as reaction temperature, pressure, period and the like. Alternatively, the molecular weight distribution can also be controlled by mixing multiple types of polyamide resins having different average molecular weights obtained under different polymerization conditions or fractionally precipitating the polyamide resin obtained after polymerization.

The molecular weight distribution can be determined by GPC analysis, specifically as a relative value equivalent to the molecular weight distribution of poly (methyl methacrylate) used as a standard by employing the instrument "HLC-8320GPC" available from Tosoh Corporation and two "TSK gel Super HM-H" columns available from Tosoh Corporation eluting with 10 mmol/l sodium trifluoroacetate in hexafluoroisopropanol (HFIP) under conditions of a resin concentration of 0.02 % by mass, a column temperature of 40 °C, a flow rate of 0.3 ml/min and detection with a refractive index detector (RI). A calibration curve is generated from measurements of six PMMA standards dissolved in HFIP.

Further, the polyamide resin preferably has a melt viscosity of 50 to 1200 Pa·s as measured under conditions of a temperature of the melting point of the polyamide resin plus 30 °C, a shear rate of 122 sec$^{-1}$, and a moisture content of the polyamide resin of 0.06 % by mass or less. When the melt viscosity is in such a range, the polyamide resin can be readily converted into a film or fiber. If the polyamide resin has two or more melting points as described later, the temperature at the top of an endothermic peak on the higher temperature side is taken as the melting point to perform the measurement.

The melt viscosity is more preferably in the range of 60 to 500 Pa·s, even more preferably 70 to 100 Pa·s.

The melt viscosity of the polyamide resin can be controlled by, for example, appropriately selecting the inlet ratio of the starting dicarboxylic acid component and diamine component, as well as the polymerization catalyst, molecular weight modifier, polymerization temperature and polymerization period.

Further, the retention of the flexural modulus upon water absorption of the polyamide resin is preferably 85 % or more. When the retention of the flexural modulus upon water absorption is in such a range, the molded articles prepared therefrom tend to suffer less loss of properties at high temperature and high humidity and therefore less deformation such as warpage.

The retention of the flexural modulus upon water absorption here is defined as the ratio (%) of the flexural modulus of a bending test specimen of a polyamide resin upon absorption of 0.5 % by mass of water to the flexural modulus upon absorption of 0.1 % by mass of water, and higher values of this factor mean that the flexural modulus is less likely to decrease even if water is absorbed.

More preferably, the retention of the flexural modulus upon water absorption is 90 % or more, even more preferably 95 % or more.

The retention of the flexural modulus upon water absorption of the polyamide resin can be controlled by, for example, the mixing ratio of p-xylylenediamine and m-xylylenediamine, wherein higher proportions of p-xylylenediamine can improve the retention of the flexural modulus. Alternatively, the retention of the flexural modulus upon water absorption can also be controlled by controlling the degree of crystallinity of the bending test specimen.

Preferably, the polyamide resin has a water absorption rate of 1 % by mass or less, more preferably 0.6 % by mass or less, even more preferably 0.4 % by mass or less, when the polyamide resin is immersed in water at 23 °C for one week and then taken out and wiped to remove water and immediately after then, the water absorption rate is determined. When the water absorption rate is in such ranges, the molded articles prepared therefrom are readily prevented from deformation due to water absorption, and foaming is reduced during the molding of the composite material under heat and pressure or the like, whereby molded articles with less bubbles can be obtained.

Further, the polyamide resin is favorably used when the polyamide resin preferably has a terminal amino group ($[NH_2]$) concentration of less than 100 μeq/g, more preferably 5 to 75 μeq/g, even more preferably 10 to 60 μeq/g and preferably has a terminal carboxyl group ($[COOH]$) concentration of less than 150 μeq/g, more preferably 10 to 120 μeq/g, even more preferably 10 to 100 μeq/g. The use of a polyamide resin having such terminal group concentrations tends to readily stabilize the viscosity during the conversion of the polyamide resin into a film or a fiber and to improve the reactivity with the carbodiimide compounds described later.

Further, the ratio of the terminal amino group concentration to the terminal carboxyl group concentration ($[NH_2]/[COOH]$) is preferably 0.7 or less, more preferably 0.6 or less, especially preferably 0.5 or less. If this ratio is greater than 0.7, the molecular weight may be hard to control during the polymerization of the polyamide resin.

The terminal amino group concentration can be determined by dissolving 0.5 g of a polyamide resin in 30 ml of a phenol/methanol (4:1) mixed solution with stirring at 20 to 30 °C and titrating the solution with 0.01 N hydrochloric acid. Similarly, the terminal carboxyl group concentration can be calculated as follows: 0.1 g of a polyamide resin is dissolved in 30 ml of benzyl alcohol at 200 °C and 0.1 ml of a phenol red solution is added in the range of 160 °C to 165 °C. This solution is titrated with a titration solution of 0.132 g of KOH in 200 ml of benzyl alcohol (0.01 mol/l expressed as KOH content) until the endpoint is reached at which the color changes from yellow to red completely.

Preferably, the polyamide resin of the present invention has a molar ratio of the diamine component to the dicarboxylic acid component reacted (the number of moles of the reacted diamine component / the number of moles of the reacted dicarboxylic acid component; hereinafter sometimes referred to as "reaction molar ratio") of 0.97 to 1.02. When the molar ratio is in such a range, the molecular weight or molecular weight distribution of the polyamide resin can be readily controlled in any range.

More preferably, the reaction molar ratio is less than 1.0, even more preferably less than 0.995, especially less than 0.990, and the lower limit is more preferably 0.975 or more, even more preferably 0.98 or more.

The reaction molar ratio (r) here is determined by the equation below:

$$r = (1-cN-b(C-N))/(1-cC+a(C-N))$$

wherein:

a: M1/2
b: M2/2
c: 18.015 (the molecular weight of water (g/mol))
M1: the molecular weight of the diamine (g/mol)
M2: the molecular weight of the dicarboxylic acid (g/mol)
N: terminal amino group concentration (eq/g)
C: terminal carboxyl group concentration (eq/g).

It should be understood that when the polyamide resin is synthesized from monomers having different molecular weights as a diamine component and a dicarboxylic acid component, M1 and M2 are calculated depending on the proportions (molar ratio) of the starting monomers. It should also be understood that if the synthesis vessel is a completely closed system, the molar ratio of loaded monomers equals the reaction molar ratio, but the inlet molar ratio may not always equal the reaction molar ratio because the actual synthesizer cannot be a completely closed system. Moreover, the inlet molar ratio may not always equal the reaction molar ratio because loaded monomers may not completely react. Thus, the reaction molar ratio refers to the molar ratio of actually reacted monomers determined from the terminal group concentrations of a finished polyamide resin.

The reaction molar ratio of the polyamide resin can be controlled by appropriately selecting reaction conditions such as the inlet molar ratio of starting dicarboxylic acid component and diamine component, reaction period, reaction temperature, the rate of dropwise addition of xylylenediamine, the pressure in the vessel, the timing of starting depressurization and the like.

When the polyamide resin is prepared by the so-called salt process, a reaction molar ratio of 0.97 to 1.02 may be specifically achieved by selecting the ratio of the starting diamine component / the starting dicarboxylic acid component in this range and allowing the reaction to proceed sufficiently far, for example. In the case of a process involving continuous dropwise addition of a diamine to a molten dicarboxylic acid, it may be achieved by not only selecting an inlet ratio in this range but also controlling the amount of the diamine to be refluxed during the dropwise addition of the diamine and removing the added diamine outside the reaction system. Specifically, the diamine may be removed outside the system by controlling the temperature in the reflux column in an optimal range or appropriately controlling the shapes and amounts of packings in the packed column such as the so-called Raschig rings, Lessing rings and saddles.

Alternatively, unreacted diamine can also be removed outside the system by reducing the reaction period after dropwise addition of the diamine. Further, unreacted diamine can also be removed outside the system as appropriate by controlling the rate of dropwise addition of the diamine. These methods allow the reaction molar ratio to be controlled in a predetermined range even if the inlet ratio is outside a desired range.

The process for preparing the polyamide resin is not specifically limited, but the polyamide resin is prepared by using known methods and polymerization conditions. During the polycondensation of the polyamide resin, a small amount of a monoamine or monocarboxylic acid may be added as a molecular weight modifier. For example, the polyamide resin is prepared by heating a salt composed of a diamine component containing xylylenediamine and a dicarboxylic acid such as adipic acid, sebacic acid or the like under pressure in the presence of water to polymerize it in a molten state while removing the added water and condensed water. Alternatively, the polyamide resin can also be prepared by directly adding xylylenediamine to a dicarboxylic acid in a molten state and polycondensing them at atmospheric pressure. In the latter case, polycondensation proceeds by continuously adding the diamine to the dicarboxylic acid while heating the reaction system to a reaction temperature not lower than the melting points of the oligoamide and polyamide produced to maintain the reaction system in a homogeneous liquid state.

Further, the polyamide resin may also be subjected to solid state polymerization after the polyamide resin is prepared by melt polymerization. The method of solid state polymerization is not specifically limited, but can be performed using known methods and polymerization conditions.

In the present invention, the polyamide resin preferably has a melting point of 150 to 310 °C, more preferably 180 to 300 °C. Further, the polyamide resin preferably has a glass transition point of 50 to 100 °C, more preferably 55 to 100 °C, especially preferably 60 to 100 °C. When the melting point is in such ranges, heat resistance tends to improve.

As used herein, the melting point refers to the temperature at the top of the endothermic peak during heating observed by DSC (differential scanning calorimetry). The glass transition point refers to the glass transition point determined by melting a sample by heating the sample once to eliminate the influence of thermal history on crystallinity and then heating the sample again. The melting point can be determined from the temperature at the top of the endothermic peak observed by using, for example, "DSC-60" available from SHIMADZU CORPORATION when a sample of about 5 mg is melted by heating from room temperature to a temperature equal to or higher than an expected melting point at a rate of 10 °C/min under a nitrogen stream of 30 ml/min. Then, the melted polyamide resin is rapidly cooled with dry ice and heated again to a temperature equal to or higher than the melting point at a rate of 10 °C/min, whereby the glass transition point can be determined.

The polyamide resin composition used in the present invention can also contain polyamide resins other than the xylylenediamine-based polyamide resins described above and elastomer components. The other polyamide resins include polyamide 66, polyamide 6, polyamide 46, polyamide 6/66, polyamide 10, polyamide 612, polyamide 11, polyamide 12, polyamide 66/6T composed of hexamethylenediamine, adipic acid and terephthalic acid, and polyamide 6I/6T composed of hexamethylenediamine, isophthalic acid and terephthalic acid, and the like. The amount of these resins contained is preferably 5 % by mass or less, more preferably 1 % by mass or less of the polyamide resin composition.

Elastomer components that can be used include, for example, known elastomers such as polyolefin elastomers, diene elastomers, polystyrene elastomers, polyamide elastomers, polyester elastomers, polyurethane elastomers, fluorinated elastomers, silicone elastomers and the like, preferably polyolefin elastomers and polystyrene elastomers. These elastomers also preferably include those modified with $\alpha$, $\beta$-unsaturated carboxylic acids and their anhydrides, acrylamides and derivatives thereof or the like in the presence or absence of a radical initiator to impart compatibility with the polyamide resin.

The amount of such other polyamide resins or elastomer components contained is typically 30 % by mass or less, preferably 20 % by mass or less, especially 10 % by mass or less of the polyamide resin composition.

In the polyamide resin composition described above, one polyamide resin or a blend of multiple polyamide resins can be used.

Further, the polyamide resin composition used in the present invention can contain one or a blend of two or more of resins such as polyester resins, polyolefin resins, polyphenylene sulfide resins, polycarbonate resins, polyphenylene ether resins, polystyrene resins and the like so far as the purposes and advantages of the present invention are not adversely affected. The amount of them contained is preferably 10 % by mass or less, more preferably 1 % by mass or less of the polyamide resin composition.

Further, the thermoplastic resin composition used in the present invention can contain additives including stabilizers such as antioxidants and heat stabilizers, hydrolysis resistance improvers, weather stabilizers, matting agents, UV absorbers, nucleating agents, plasticizers, dispersing agents, flame retardants, antistatic agents, discoloration inhibitors, anti-gelling agents, colourants, release agents and the like so far as the purposes and advantages of the present invention are not adversely affected. Detailed information about these additives can be found in paragraphs 0130 to 0155 of Japanese Patent No. 4894982, the disclosure of which is incorporated herein by reference.

<Continuous reinforcing fiber>

The commingled yarn of the present invention comprises a continuous reinforcing fiber. The continuous reinforcing fiber refers to a continuous reinforcing fiber having a fiber length greater than 6 mm. The average fiber length of the continuous reinforcing fiber used in the present invention is not specifically limited, but preferably in the range of 1 to 20,000 m, more preferably 100 to 10,000 m, even more preferably 1,000 to 7,000 m to improve moldability. Typically, the continuous reinforcing fiber used in the present invention is a continuous reinforcing fiber bundle composed of multiple filaments of the continuous reinforcing fiber.

Preferably, the total fineness of the continuous reinforcing fiber used in the present invention per one commingled yarn is 100 to 50000 dtex, more preferably 500 to 40000 dtex, even more preferably 1000 to 10000 dtex, especially preferably 1000 to 3000 dtex. When the total fineness is in such ranges, processing is easier and the resulting commingled yarn has higher elastic modulus and strength.

Preferably, the total number of filaments of the continuous reinforcing fiber used in the present invention per commingled yarn is 500 to 50000 filaments, more preferably 500 to 20000 filaments, even more preferably 1000 to 10000 filaments, especially preferably 1500 to 5000 filaments. When the total number is in such ranges, the dispersion state of the continuous reinforcing fiber in the commingled yarn further improves.

One commingled yarn may be prepared using one continuous reinforcing fiber bundle or multiple continuous reinforcing fiber bundles in order that the continuous reinforcing fiber may satisfy predetermined total fineness and total number of filaments. In the present invention, one commingled yarn is preferably prepared using 1 to 10 continuous reinforcing fiber bundles, more preferably 1 to 3 continuous reinforcing fiber bundles, even more preferably one continuous reinforcing fiber bundle.

The average tensile modulus of the continuous reinforcing fiber contained in the commingled yarn of the present invention is preferably 50 to 1000 GPa, more preferably 200 to 700 GPa. When the tensile modulus is in such ranges, the tensile modulus of the commingled yarn as a whole further improves.

Examples of the continuous reinforcing fiber include glass fibers; carbon fibers; plant fibers (including kenaf, bamboo fibers and the like); and inorganic fibers such as alumina fibers, boron fibers, ceramic fibers, and metallic fibers (steel fibers and the like) ; organic fibers such as aramid fibers, polyoxymethylene fibers, aromatic polyamide fibers, polyparaphenylene benzobisoxazole fibers, and ultra-high molecular weight polyethylene fibers; and the like. Among them, carbon fibers are preferably used because they have excellent properties including high strength and high elastic modulus in spite of the light weight. Carbon fibers that can preferably be used include polyacrylonitrile-based carbon fibers and pitch-based carbon fibers. Further, carbon fibers produced from plant-derived materials such as lignin and cellulose can also be used.

«Treating agent for the continuous reinforcing fiber»

Preferably, the continuous reinforcing fiber used in the present invention has been treated with a treating agent. Examples of such treating agents include sizing agents and surface-treating agents, preferably the treating agents described in paragraphs 0093 and 0094 of Japanese Patent No. 4894982, the disclosure of which is incorporated herein by reference.

Especially in cases where the thermoplastic resin used in the present invention contains a polar group, the continuous reinforcing fiber is preferably treated with a treating agent containing a functional group reactive with the polar group of the thermoplastic resin. Typically, the functional group reactive with the polar group of the thermoplastic resin is chemically bound to the thermoplastic resin during thermoforming. Such a treating agent for the continuous reinforcing fiber containing a functional group reactive with the polar group of the thermoplastic resin preferably has the function to size filaments of the continuous reinforcing fiber. Thus, it helps to physically size filaments in a commingled yarn before thermal processing.

Specifically, examples of the continuous reinforcing fiber containing a functional group reactive with the polar group of the thermoplastic resin preferably include epoxy resins such as bisphenol A type epoxy resins; and vinyl ester resins which are epoxy acrylate resins containing an acrylic or methacrylic group in one molecule such as bisphenol A type vinyl ester resins, novolac type vinyl ester resins, and brominated vinyl ester resins. Further, urethane-modified epoxy resins and urethane-modified vinyl ester resins are also included.

Among the above list, examples of the treating agent used in the present invention preferably include epoxy alkanes, alkane diepoxides, bisphenol A diglycidyl ether, bisphenol A - alkylene oxide adduct, bisphenol A - alkylene oxide adduct diglycidyl ether, bisphenol A - dicyanate adduct, bisphenol F glycidyl ether, bisphenol F - alkylene oxide adduct, bisphenol F - alkylene oxide adduct diglycidyl ether, bisphenol F - dicyanate adduct, acrylic acid, methacrylic acid, crotonic acid, acrylic acid ester compounds, methacrylic acid ester compounds, crotonic acid ester compounds, ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, 1, 4-cyclohexane dimethanol, dipropylene glycol, polyethylene glycol, polypropylene glycol, polytetraethylene glycol, bisphenol A, hydrogenated bisphenol A, bisphenol F, hydrogenated bisphenol F; trialkoxy- or triallyloxy-silane compounds such as aminopropyltriethoxysilane, phenylaminopropyltrimethoxysilane, glycidylpropyltriethoxysilane, methacryloxypropyltrimethoxysilane, and vinyltriethoxysilane; ureido silane, sulfide silane, vinyl silane, imidazole silane and the like; more preferably bisphenol A diglycidyl ether, bisphenol A - alkylene oxide adduct, bisphenol A - alkylene oxide adduct diglycidyl ether, bisphenol A - dicyanate adduct, bisphenol F glycidyl ether, bisphenol F - alkylene oxide adduct, bisphenol F - alkylene oxide adduct diglycidyl ether, and bisphenol F - dicyanate adduct. When such a treating agent is used, the resulting molded articles improve in the interfacial adhesion between the continuous reinforcing fiber and the thermoplastic resin, and therefore, tend to more effectively achieve advantages such as a reduction of voids, an increase in the elastic modulus or strength, and an improvement in fatigue properties.

The amount of the treating agent is preferably 0.001 to 1.5 % by mass, more preferably 0.1 to 1.2 % by mass, even more preferably 0.5 to 1.1 % by mass of the continuous reinforcing fiber. When the amount is in such ranges, the dispersity of the continuous reinforcing fiber is more improved to achieve more effectively the advantages of the present invention.

«Method for treating the continuous reinforcing fiber with the treating agent»

Known methods can be employed to treat the continuous reinforcing fiber with the treating agent. For example, the continuous reinforcing fiber may be added to a solution containing the treating agent dissolved therein to deposit the treating agent on the surface of the continuous reinforcing fiber. Alternatively, the treating agent can be sprayed by air-blowing onto the surface of the continuous reinforcing fiber. Further, a continuous reinforcing fiber already treated with a surface-treating agent or a treating agent may be used, or a commercially available product may be washed to remove the surface-treating agent or treating agent thereon and then surface-treated again with a desired amount of a treating agent.

<Preferred embodiments of the present invention>

In the present invention, twisted commingled yarns according to the following embodiments are especially preferred.

   <1> A commingled yarn comprising a polyamide resin fiber made from a polyamide resin composition, a continuous reinforcing fiber, and a treating agent for the polyamide resin fiber; wherein the amount of the treating agent is 0.1 to 2.0 % by mass of the polyamide resin fiber; and the polyamide resin composition comprises a polyamide resin containing a diamine structural unit, 50 mol % or more of which is derived from xylylenediamine, and having a number average molecular weight (Mn) of 6,000 to 30,000.

<2> The commingled yarn as defined in <1>, wherein the polyamide resin contains 0.5 to 5 % by mass of components having a molecular weight of 1,000 or less.

<3> The commingled yarn as defined in <1> or <2>, further comprising a treating agent for the continuous reinforcing fiber containing a functional group reactive with the polyamide resin, wherein the amount of the treating agent is 0.01 to 1.5 % by mass of the continuous reinforcing fiber.

<4> The commingled yarn as defined in any one of <1> to <3>, wherein the continuous reinforcing fiber has a dispersity of 40 to 100 in the commingled yarn.

<5> The commingled yarn as defined in any one of <1> to <4>, which uses a polyamide resin fiber having a fineness of 40 to 600 dtex and composed of 1 to 200 filaments.

<6> The commingled yarn as defined in any one of <1> to <5>, which uses a polyamide resin and a continuous reinforcing fiber wherein the ratio between the total fineness of the polyamide resin fiber and the total fineness of the continuous reinforcing fiber (the total fineness of the polyamide resin fiber / the total fineness of the continuous reinforcing fiber) is 0.1 to 10.

<7> The commingled yarn as defined in any one of <1> to <6>, which uses a polyamide resin and a continuous reinforcing fiber wherein the ratio between the total number of filaments of the polyamide resin fiber and the total number of filaments of the continuous reinforcing fiber (the total number of filaments of the polyamide resin fiber / the total number of filaments of the continuous reinforcing fiber) is 0.001 to 1.

According to the embodiments as described above, the dispersity of the continuous reinforcing fiber improves and the advantages of the present invention tend to be achieved more effectively.

<Processes for preparing the commingled yarns>

Next, an example of a process for preparing a commingled yarn of the present invention is described below.

First, yarn rolls of a continuous thermoplastic resin fiber (preferably a continuous thermoplastic resin fiber surface-treated with a treating agent) and a continuous reinforcing fiber (preferably a continuous reinforcing fiber surface-treated with a treating agent) are provided. One or more than one yarn roll may be provided for each of the continuous thermoplastic resin fiber bundle and the continuous reinforcing fiber bundle. The number of yarn rolls should preferably be controlled as appropriate so that the ratio between the numbers of filaments and the ratio between the finenesses of the continuous thermoplastic resin fiber and the continuous reinforcing fiber may be desired values in the commingled yarn.

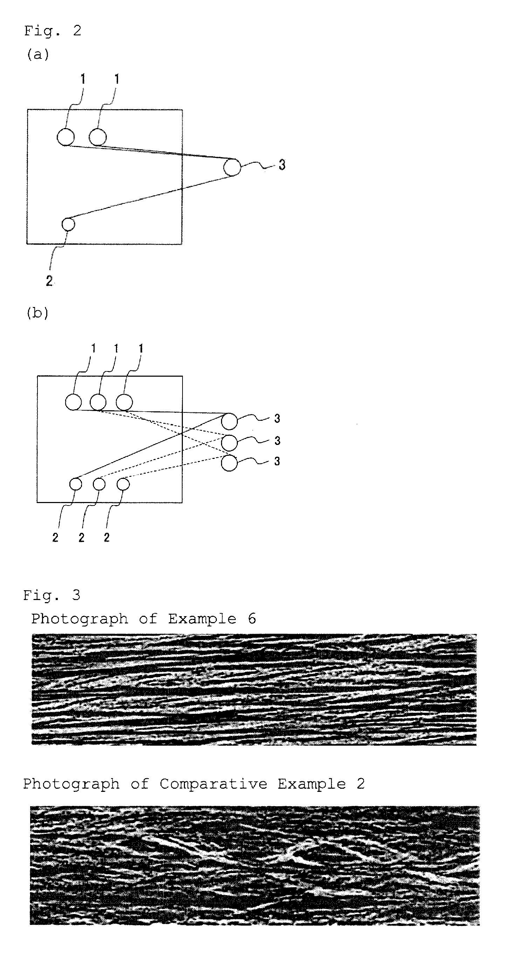

Fig. 2 is a schematic diagram showing embodiments of yarn rolls during the preparation of a commingled yarn of the present invention, in which 1 represents a yarn roll of a continuous reinforcing fiber bundle, 2 represents a yarn roll of a continuous thermoplastic resin fiber bundle, and 3 represents a yarn roll of a commingled yarn. It should be noted that Fig. 2 is a schematic diagram and does not describe the step of opening or homogenizing the continuous thermoplastic resin fiber bundle and the continuous reinforcing fiber bundle. Fig. 2 (a) is a schematic diagram showing that one commingled yarn is formed from two continuous thermoplastic resin fiber bundles drawn from two yarn rolls 2 of the continuous thermoplastic resin fiber bundles and one continuous reinforcing fiber bundle drawn from one yarn roll 1 of the continuous reinforcing fiber bundle and wound up into one yarn roll 3. The ratio between continuous thermoplastic resin fiber bundles and continuous reinforcing fiber bundles here is preferably controlled as appropriate so that the ratio between the numbers of filaments may be a desired value in the commingled yarn because the number depends on the numbers of filaments and the finenesses of the fiber bundles used. Thus, the numbers of yarn rolls are not limited to the numbers shown in Fig. 2(a). Alternatively, multiple commingled yarns may be formed at once. Fig. 2(b) is a schematic diagram showing a case in which multiple commingled yarns are prepared at once. In Fig. 2(b), continuous reinforcing fiber bundles drawn from three yarn rolls 1 and continuous thermoplastic resin fiber bundles drawn from three different yarn rolls 2 are combined to form three commingled yarns at the same time. In Fig. 2(b), the number of yarn rolls of continuous thermoplastic resin fiber bundles and the number of yarn rolls of continuous reinforcing fiber bundles also should preferably be controlled as appropriate so that each commingled yarn may satisfy desired values for the ratio between the numbers of filaments and the ratio between the finenesses of the continuous thermoplastic resin fiber and the continuous reinforcing fiber.

Continuous thermoplastic resin fiber bundles and continuous reinforcing fiber bundles are each drawn from yarn rolls and opened by a known method. Examples of opening methods include vibration, stress, air-blowing and the like. Continuous thermoplastic resin fiber bundles and continuous reinforcing fiber bundles are combined into one bundle as the continuous thermoplastic resin fiber bundles and the continuous reinforcing fiber bundles are opened, and the bundles are further homogenized by applying vibration, stress, air-blowing or the like to form a commingled yarn. Then, the resulting yarn is typically wound up into a yarn roll by a winder. The commingled yarn may be twisted after the commingled yarn has been wound up into a yarn roll, or the commingled yarn may be twisted before it is wound up into a yarn roll. According to the present invention, the continuous reinforcing fiber can be better dispersed by using a continuous thermoplastic resin fiber bundle treated with a specific amount of a treating agent and then opening the continuous thermoplastic resin fiber bundle to homogenize the continuous thermoplastic resin fiber bundle with a continuous reinforcing fiber bundle. Further, more improved dispersion can be achieved when the continuous reinforcing fiber bundle is also used after it has been treated with a treating agent.

To homogeneously commingle continuous reinforcing fiber bundles and continuous thermoplastic resin fiber bundles, JP-A-H2-308824 discloses a method for crimping continuous organic thermoplastic fiber bundles, and JP-A-H3-33237 discloses a method for adding a specific amount of a sizing agent to each continuous fiber bundle. As for opening techniques with reduced single filament breakage, JP-A-H2-28219 and JP-A-H4-73227 disclose methods for opening continuous fiber bundles in a liquid. Further, JP-A-H9-324331 discloses a method for homogeneously combining a continuous reinforcing fiber bundle and a continuous thermoplastic resin fiber bundle. These techniques can be adopted as appropriate without departing from the spirit of the present invention, and the disclosures of these documents are incorporated herein by reference.

<Molded articles using the commingled yarns>

The commingled yarns according to the present invention can be used as weave fabrics or knitted fabrics by a known method while they remain in the form of twisted yarns. The types of weave fabrics are not specifically limited, and any of plain weave fabric, 8-harness satin weave fabric, 4-harness satin weave fabric, twill weave fabric and the like may be included. So-called bias weave fabric may also be included. Further, so-called non-crimp as weave fabrics having substantially no non-crimp weave fabric described in JPA-S55-30974 may also be included.

The knitted fabrics are not specifically limited either, and known knitting methods such as warp knitting, weft knitting, Raschel knitting and the like can be selected at will.

The weave fabric or knitted fabrics of the present invention are favorable in that the weave fabric or knitted fabrics can be obtained while the filament yarns are in the form of twisted yarns. Another advantage is that the commingled yarns can remain twisted after the weave fabric or knitted fabrics of the present invention are thermally processed.

Further, the commingled yarns of the present invention can also be used as tape-like or sheet-like substrates formed by unidirectionally aligning them, braid-like or rope-like substrates, or laminates obtained by laminating two or more such substrates.

The molded articles of the present invention can be conveniently applied as parts of, for example, electronic/electric equipment such as personal computers, office automation equipment, audiovisual equipment, cellular phones and the like; optical equipment, precision equipment, toys, household and office electrical appliances and the like; as well as parts of automobiles, airplanes, ship and the like. Especially, the present invention is suitable for preparing molded articles having recessed or raised features.

EXAMPLES

The following examples further illustrate the present invention. The materials, amounts used, proportions, process details, procedures and the like shown in the following examples can be changed as appropriate without departing from the spirit of the present invention. Thus, the scope of the present invention is not limited to the specific examples shown below.

1. Preparation of continuous thermoplastic resin fibers

<Thermoplastic resins>

The following thermoplastic resins were used.
N66: Polyamide resin 66 (AMILAN CM3001 from Toray Industries, Inc.);
MXD6: A m-xylylene adipamide resin (grade S6007 from Mitsubishi Gas Chemical Company, Inc.) having a number average molecular weight (Mn) of 25000, and containing 0.51 % by mass of components having a molecular weight of 1000 or less;
LEXTER: A xylylene sebacamide resin obtained by polymerizing a xylylenediamine mixture of m-xylylenediamine and p-xylylenediamine with sebacic acid (grade 8500 from Mitsubishi Gas Chemical Company, Inc.), which has a number average molecular weight (Mn) of 20000, and containing 0.3 % by mass of components having a molecular weight of 1000 or less;

PP: A polypropylene resin (grade SA3A, fiber grade from Japan Polypropylene Corporation).

<Conversion of the thermoplastic resins into fibers>

The thermoplastic resins described above were converted into fibers according to the following method.

Each thermoplastic resin dried using a vacuum dryer was melt-extruded in a single-screw extruder having a 30 mmφ screw to form strands through a die and the strands were drawn while they were taken up by a roller to give a multifilament yarn (a continuous thermoplastic resin fiber bundle). The number of filaments per continuous thermoplastic resin fiber bundle was controlled by adjusting the number of holes of the die. Further, the fineness was controlled to a predetermined value by adjusting the diameter of the holes of the die.

(Fiber diameter)

A section of the continuous thermoplastic resin fiber was observed with a scanning electron microscope (SEM), and the diameters at random ten points of the fiber were measured to calculate the average.

(Fineness)

The weight per meter of the fiber was measured, and converted into a fineness.

2. Continuous reinforcing fibers

The following continuous reinforcing fibers were used. CF: A carbon fiber available as T700-12000-60E from Toray Industries, Inc., having 8000 dtex and composed of 12000 filaments; GF1: A glass fiber from NITTO BOSEKI CO., LTD., having 1350 dtex and composed of 800 filaments;
GF2: A glass fiber from Nippon Electric Glass Co., Ltd., having 23100 dtex and composed of 2000 filaments.

3. Preparation of commingled yarns

Commingled yarns were prepared according to the following method.

Each continuous thermoplastic resin fiber and continuous reinforcing fiber was drawn from yarn rolls and opened by air-blowing and mechanical vibration. While opening, the continuous thermoplastic resin fiber and continuous reinforcing fiber were combined into one bundle and further homogenized by air-blowing and vibration to form a commingled yarn.

Further, the commingled yarn obtained was twisted by the number of twists per meter shown in the table below. The commingled yarn was twisted by turning one end clockwise while the other end was fixed.

4. Evaluation of the appearance of weave fabrics of the commingled yarns

The appearance of each commingled yarn obtained was visually observed.

A: Homogeneous appearance with no visible fluff or bulge of fiber bundles.
B: Homogeneous appearance except for some fluff or irregularity of fiber bundles.
C: Less homogeneous appearance with visible fluff or irregularity of fiber bundles.

5. Determination of the fiber irregularity of molded articles prepared from the commingled yarns

The commingled yarns obtained were unidirectionally aligned and molded under conditions of a molding pressure of 3 MPa, a molding time of 5 minutes and the molding temperatures shown in the table below. The molded articles were unidirectionally fiber-reinforced sheets having a width of 20 mm and a length of 200 mm. The surfaces of the molded articles prepared were observed with a digital microscope. Photographs of the surfaces obtained were analyzed by using the image analysis software Image J. Regions in which the continuous reinforcing fiber is irregularly oriented were contoured and measured for their areas. The fiber irregularity was defined as the ratio of the area of regions in which the continuous reinforcing fiber is offset from a predetermined orientation by 10 degrees or more to the area of a fiber-reinforced sheet (expressed in %).

6. Appearance of molded articles

After thermoforming in the same manner as described in the "Determination of the fiber irregularity" above, the appearance of each commingled yarn was visually evaluated as follows:

A: Homogeneous appearance with no visible irregularities or concentration of fibers.
B: Homogeneous appearance except for some irregularities or concentration of fibers.
C: Less homogeneous appearance with irregularities or concentration of fibers.

7. Improvement in the tensile strength of molded articles prepared from the commingled yarns

After thermoforming in the same manner as described in the "Determination of the fiber irregularity" above, a length of 30 cm was cut from each commingled yarn, and both ends were embedded in an epoxy resin to prepare grip sections. The tensile strength was measured using an Instron universal testing machine (model 4206) from Instron under conditions of a span length of 200 mm and a test speed of 10 mm/min. Specimens before thermoforming were also tested in the same manner, and an improvement in tensile strength (expressed in fold) was calculated.

8. Unimpregnated fraction of molded articles of twill weave fabrics

The commingled yarns described above were used as warp and weft to prepare twill weave fabrics. The density of the picks was 920 yarns/m. The weave fabric fabrics obtained were molded at the temperatures shown in the table.
Cross-sections of the molded articles thus prepared were observed with a digital microscope. Photographs of the cross-sections obtained were analyzed using the image analysis software Image J to contour regions in which the continuous reinforcing fiber is not impregnated with the thermoplastic resin and measure their areas. The unimpregnated fraction of a weave fabric was defined as the ratio of the area of regions in which the continuous reinforcing fiber is not impregnated with the thermoplastic resin to the cross-sectional area of the weave fabric (expressed in %).

9. Elastic modulus of molded articles of twill weave fabrics

The weave fabrics obtained were measured for their tensile elastic modulus according to ISO179.

[Table 1]

| | Comparative Example 1 | Example 1 | Example 2 | Example 3 | Comparative Example 2 | Example 4 | Example 5 | Example 6 | Example 7 | Example 8 | Comparative Example 3 |
|---|---|---|---|---|---|---|---|---|---|---|---|
| Kind of Continuous thermoplastic resin fiber | N66 | N66 | N66 | N66 | MXD6 | MXD6 | MXD6 | MXD6 | PP | LEXTER | PP |
| Fineness of Continuous thermoplastic resin fiber | 235dtex | 235dtex | 235dtex | 235dtex | 360dtex | 360dtex | 360dtex | 360dtex | 280dtex | 360dtex | 280dtex |
| Number of Filament of Continuous thermoplastic resin fiber | 24 | 24 | 24 | 24 | 48 | 48 | 48 | 48 | 32 | 48 | 32 |
| Kind of Continuous reinforcing fiber | CF | CF | CF | CF | CF | CF | CF | CF | GF1 | GF2 | GF1 |
| Fineness of Continuous reinforcing fiber | 8000dtex | 8000dtex | 8000dtex | 8000dtex | 8000dtex | 8000dtex | 8000dtex | 8000dtex | 1350dtex | 23100dtex | 1350dtex |
| Number of Filament of Continuous reinforcing fiber | 12000 | 12000 | 12000 | 12000 | 12000 | 12000 | 12000 | 12000 | 800 | 2000 | 800 |
| Molding temperature (°C) | 280°C | 280°C | 280°C | 280°C | 280°C | 280°C | 280°C | 280°C | 210°C | 250°C | 210°C |
| Number of twist (time/m) | 0 | 10 | 30 | 50 | 0 | 10 | 30 | 50 | 30 | 20 | 0 |
| Appearance of weave fabrics of commingled yarns | C | B | A | C | C | B | A | A | A | A | C |
| Molded article of commingled yarns | | | | | | | | | | | |

| | Comparative Example 1 | Example 1 | Example 2 | Example 3 | Comparative Example 2 | Example 4 | Example 5 | Example 6 | Example 7 | Example 8 | Comparative Example 3 |
|---|---|---|---|---|---|---|---|---|---|---|---|
| Fiber irregularity (%) | 15 | 11 | 6 | 2 | 6 | 3 | 2 | 1 | 3 | 4 | 15 |
| Appearance | C | B | B | A | C | B | A | A | B | A | C |
| Improvement in tensile strength (fold) | 1.00 | 1.08 | 1.15 | 1 15 | 1.00 | 1.06 | 1.06 | 1.03 | 1.04 | 1.10 | 1.00 |
| Molded articles of twill weave fabric | | | | | | | | | | | |
| Unimpregnated ratio (%) | 2.3 | 2.1 | 1.9 | 2.1 | 1.2 | 0.6 | 0.7 | 1.1 | 0.5 | 0.8 | 0.6 |
| Elastic modulus (Gpa) | 39 | 43 | 44 | 41 | 40 | 50 | 45 | 42 | 22 | 23 | 19 |

A comparison between the Examples and Comparative examples described above showed that the commingled yarns of the present invention exhibit high orientation (low fiber irregularity) of the continuous reinforcing fiber. As a result, the commingled yarns had excellent appearance. When such commingled yarns were thermally processed, molded articles having high mechanical strength were obtained. Further, it was also shown that the impregnation ratio of the thermoplastic resin is high.

Further, Fig. 3 shows photographs of the surfaces of Example 6 and Comparative example 2 observed with a digital microscope. The photographs also show that the continuous reinforcing fiber of the commingled yarn of the present invention is oriented even after thermoforming in contrast to the continuous reinforcing fiber of the commingled yarn of the Comparative example that was found to be irregularly oriented after thermoforming.

DESCRIPTION OF THE REFERENCE NUMERALS

1: Yarn roll of a continuous reinforcing fiber bundle;
2: Yarn roll of a continuous thermoplastic resin fiber bundle;
3: Yarn roll of a commingled yarn.

**Claims**

1. A commingled yarn comprising a continuous thermoplastic resin fiber and a continuous reinforcing fiber as fiber components, which has twist.

2. The commingled yarn according to claim 1, wherein the continuous thermoplastic resin fiber is a polyamide resin fiber.

3. The commingled yarn according to claim 1 or 2, wherein the continuous thermoplastic resin fiber comprises at least one kind selected from polyamide 6, polyamide 66 and a xylylenediamine-based polyamide.

4. The commingled yarn according to any one of claims 1 to 3, wherein the continuous reinforcing fiber is a carbon fiber and/or a glass fiber.

5. A weave fabric or knitted fabric using a commingled yarn according to any one of claims 1 to 4.

6. A composite material obtainable by thermally processing a commingled yarn according to any one of claims 1 to 4 or a weave fabric or knitted fabric according to claim 5.

7. A process for preparing a composite material, comprising preparing a commingled yarn comprising a continuous thermoplastic resin fiber and a continuous reinforcing fiber as fiber components, twisting the commingled yarn, and thermally processing the twisted commingled yarn.

8. The process according to claim 7, further comprising weaving or knitting the twisted commingled yarn before the commingled yarn is thermally processed.

Fig. 1

(1-1)

(2-1)

(1-2)            (2-2)

Fig. 2

(a)

(b)

Fig. 3

Photograph of Example 6

Photograph of Comparative Example 2

**INTERNATIONAL SEARCH REPORT**

| International application No. |
| --- |
| PCT/JP2014/054989 |

A. CLASSIFICATION OF SUBJECT MATTER
*D02G3/04*(2006.01)i, *D03D1/00*(2006.01)i, *D03D15/00*(2006.01)i, *D03D15/12*
(2006.01)i, *D04B1/14*(2006.01)i, *D04B21/00*(2006.01)i

According to International Patent Classification (IPC) or to both national classification and IPC

B. FIELDS SEARCHED

Minimum documentation searched (classification system followed by classification symbols)
D02G1/00-3/48, D03D1/00, D03D15/00, D03D15/12, D04B1/14, D04B21/00

Documentation searched other than minimum documentation to the extent that such documents are included in the fields searched
Jitsuyo Shinan Koho       1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2005-179829 A  (Fukui-Ken),<br>07 July 2005 (07.07.2005),<br>claims; paragraphs [0009], [0011], [0036],<br>[0040], [0050], [0071] to [0077]; fig. 3, 14,<br>15<br>(Family: none) | 1-4<br>3,5-8 |
| Y | JP 9-324331 A  (Asahi Fiber Glass Co., Ltd.),<br>16 December 1997 (16.12.1997),<br>claims; paragraphs [0025], [0038]<br>(Family: none) | 5-8 |

| ☒ | Further documents are listed in the continuation of Box C. | ☐ | See patent family annex. |

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    07 May,  2014 (07.05.14) | Date of mailing of the international search report<br>    20 May,  2014 (20.05.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

22

**INTERNATIONAL SEARCH REPORT**

International application No.

PCT/JP2014/054989

C (Continuation). DOCUMENTS CONSIDERED TO BE RELEVANT

| Category* | Citation of document, with indication, where appropriate, of the relevant passages | Relevant to claim No. |
|---|---|---|
| Y | JP 4894982 B1 (Mitsubishi Gas Chemical Co., Inc.), 14 March 2012 (14.03.2012), claims; paragraphs [0085], [0091] to [0094], [0109] to [0111]; example 2 & US 2013/0062806 A1 & EP 2615139 A1 & WO 2012/140785 A | 3 |
| E,A | WO 2014/050303 A1 (Mitsubishi Gas Chemical Co., Inc.), 03 April 2014 (03.04.2014), claims; examples (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9324331 A
- JP 4894982 B
- JP H2308824 A
- JP H333237 A
- JP H228219 A
- JP H473227 A